(19) Europäisches Patentamt
European Patent Office
Office européen des brevets

(11) **EP 1 999 491 B1**

(12) **EUROPÄISCHE PATENTSCHRIFT**

(45) Veröffentlichungstag und Bekanntmachung des Hinweises auf die Patenterteilung:
**29.12.2010 Patentblatt 2010/52**

(21) Anmeldenummer: **07703490.8**

(22) Anmeldetag: **16.02.2007**

(51) Int Cl.:
***G01V 1/38*** *(2006.01)*

(86) Internationale Anmeldenummer:
**PCT/EP2007/001348**

(87) Internationale Veröffentlichungsnummer:
**WO 2007/112807 (11.10.2007 Gazette 2007/41)**

(54) **VERFAHREN ZUM BESTIMMEN DER MOMENTANEN POSITION EINER AKUSTIKSEKTION EINER SCHLEPPANTENNE**

METHOD FOR DETERMINING THE INSTANTANEOUS POSITION OF AN ACOUSTIC SECTION OF A TOWED ANTENNA

PROCEDE DE DETERMINATION DE LA POSITION INSTANTANEE D'UNE SECTION ACOUSTIQUE D'UNE ANTENNE REMORQUEE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.03.2006 DE 102006014268**

(43) Veröffentlichungstag der Anmeldung:
**10.12.2008 Patentblatt 2008/50**

(73) Patentinhaber: **ATLAS Elektronik GmbH
28309 Bremen (DE)**

(72) Erfinder: **STEINER, Hans-Joachim
28359 Bremen (DE)**

(74) Vertreter: **Wasiljeff, Johannes M.B.
Jabbusch Siekmann & Wasiljeff
Patentanwälte
Otto-Lilienthal-Strasse 25
28199 Bremen (DE)**

(56) Entgegenhaltungen:
**EP-A2- 0 292 744       WO-A-03/100451
DE-C1- 19 650 164**

EP 1 999 491 B1

**Beschreibung**

Die Erfindung betrifft ein Verfahren zum Bestimmen der momentanen Position einer in gewählter Schlepptiefe geschleppten Akustiksektion einer von einem Schleppfahrzeug im Wasser nachgeschleppten Schleppantenne von ausgebrachter Länge.

Schleppantennen mit einer akustisch sensitiven Akustiksektion, die aus einer Mehrzahl von in Antennenlängsrichtung hintereinander beabstandet angeordneten, elektroakustischen Wandlern besteht, werden zum Peilen von schallabstrahlenden und schallreflektierenden Unterwasserzielen eingesetzt. Die Schleppantenne wird von einem Schleppfahrzeug nachgeschleppt. Im Empfangsbetrieb werden die elektrischen Ausgangssignale der Wandler in einer an Bord des Schleppfahrzeugs installierten Signalverarbeitungselektronik zeitrichtig verzögert und konphas zu Gruppensignalen von Richtcharakteristiken addiert. Die Hauptachse einer Richtcharakteristik gibt die Peilrichtung an, d.h. die Richtung unter der ein schallabstrahlendes oder schallreflektierendes Ziel aufgefasst wird. Der Winkel zwischen der Hauptachse der Richtcharakteristik und der Normalen der Akustiksektion wird als Peilwinkel angegeben.

Für eine ausreichend genaue Bestimmung des Peilwinkels ist die Kenntnis über die Position und die Ausrichtung der Akustiksektion der Schleppantenne erforderlich. Beides kann berechnet werden, wenn im Zeitpunkt der Peilung beispielsweise die Positionen der einzelnen Wandler der Akustiksektion bekannt sind.

Bei einem bekannten Verfahren zur Bestimmung der momentanen Position der elektroakustischen Wandler in der Akustiksektion der Schleppantenne relativ zu der Position des Schleppfahrzeugs (DE 196 50 164 A1) werden zwei Sendesignale von an Bord des Schleppschiffs voneinander beabstandet angeordneten Sendewandlern ausgesendet und von den Wandlern der Akustiksektion empfangen. Die Sendesignale werden dabei frequenzmoduliert und um ein Zeitintervall verschoben ausgesendet. Die Empfangssignale der Wandler werden demoduliert. Die Modulationsfrequenz wird mit einem Peilton verglichen, der abhängig vom Frequenzhub und der Zeitlänge des Sendesignals und dem Zeitintervall gewählt ist. Bei Gleichheit befindet sich der jeweilige Wandler auf der Längsachse in der Schleppentfernung, während eine Frequenzabweichung proportional der Ablage des Wandlers von der Längsachse der Schleppantenne ist.

Der Erfindung liegt die Aufgabe zugrunde, ein Verfahren zur Bestimmung der momentanen Position einer Akustiksektion einer Schleppantenne anzugeben, das ausreichend genaue Positionsangaben ohne zusätzlichen Hardwareaufwand liefert und wenig anspruchsvolle Rechenleistung erfordert.

Die Aufgabe ist erfindungsgemäß durch die Merkmale im Anspruch 1 gelöst.

Das erfindungsgemäße Verfahren hat den Vorteil, dass es eine praxistaugliche Bestimmung der momentanen Position und der Ausrichtung der Akustiksektion der Schleppantenne mit geringem Rechenaufwand und damit recht schnell liefert. Für die Schätzung der jeweils neuen Position der Akustiksektion nach Zurücklegen einer Schleppstrecke durch das Schleppfahrzeug ist lediglich die Vermessung der vom Schleppfahrzeug neu eingenommen Fahrzeugposition, die im Schleppfahrzeug aus Navigationsgründen ohnehin fortlaufend erfasst wird, sowie die Berücksichtigung der bei der Schleppfahrt ausgebrachten Länge der Schleppantenne, die zu Beginn der Schleppfahrt festliegt, und der eingestellten Schlepptiefe der Akustiksektion erforderlich. Diese Größen, also Fahrzeugposition, ausgebrachte Länge der Schleppantenne und Schlepptiefe der Akustiksektion, bilden die Eingangsgrößen des erfindungsgemäßen Modells, das gegenüber beliebigen Schwankungen der Eingangsgrößen sehr robust, d.h. numerisch stabil ist. Die mit dem erfindungsgemäßen Modell geschätzten Positionen und die sich ergebende Lage der Akustiksektion orientieren sich an der bekannten, vom Schleppfahrzeug zurückgelegten Fahrbahn und kehren nach einem Kursmanöver des Schleppfahrzeugs immer zu der Fahrbahn zurück, so dass sich kein bleibender Offset aufbauen kann.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Das bei einer bevorzugten Ausführung der Erfindung benutzte Modell zur Schätzung der jeweils folgenden Ortsposition des ausgewählten Orts aus der jeweils vorhergehenden Ortsposition geht von der Annahme aus, dass nach einer Fahrstrecke des Schleppfahrzeugs die dann vom ausgewählten Ort der Akustiksektion eingenommene, neue Ortsposition auf einer Geraden liegt, die eine erste fiktive Ortsposition und eine zweite fiktive Ortsposition miteinander verbindet, wobei die erste fiktive Ortsposition auf einer Verbindungsgeraden liegt, die durch die vom ausgewählten Ort zuvor eingenommene, alte Ortsposition und die neue Fahrzeugposition verläuft, und die zweite fiktive Ortsposition auf der vom Schleppfahrzeug durchfahrenen Fahrbahn liegt. Die Entfernung der beiden fiktiven Ortspositionen von der neuen Fahrzeugposition entspricht dabei einer effektiven Länge der Schleppantenne, die jeweils längs der Verbindungsgeraden bzw. der Fahrzeugbahn aufgespannt wird. Die effektive Länge der Schleppantenne bestimmt sich wiederum aus der ausgebrachten Länge der Schleppantenne, dem Abstand des ausgewählten Orts vom Antennenende und der Schlepptiefe der Akustiksektion.

Die genaue Lage der neuen Ortsposition auf der die beiden fiktiven Ortspositionen miteinander verbindenden Geraden wird vorteilhaft mit dem Abstand der neuen Ortsposition von einem der beiden fiktiven Ortspositionen definiert. Dieser Abstand ist proportional der mit einem festen Faktor multiplizierten Länge der die beiden fiktiven Ortspositionen miteinander verbindenden Geraden. Dieser Faktor wird empirisch bestimmt und liegt während der Schleppfahrt unveränderlich fest.

Das erfindungsgemäße Verfahren ist anhand eines in der Zeichnung illustrierten Ausführungsbeispiels im folgenden näher beschrieben. Es zeigen in schematischer Darstellung:

Fig. 1    ein Schleppfahrzeug mit ins Wasser ausgebrachter Schleppantenne in Seitenansicht,

Fig. 2    eine Draufsicht von Schleppfahrzeug und Schleppantenne während eines Kursmanövers des Schleppfahrzeugs,

Fig. 3 bis 7    jeweils die Positionen von Schleppfahrzeug und akustischem Schwerpunkt einer Akustiksektion der Schleppantenne zu aufeinanderfolgenden Zeitpunkten t1, t2 ... t5 der Schleppfahrt bei Ausführung eines Kursmanövers durch das Schleppfahrzeug zwecks grafischer Illustrierung des Verfahrens.

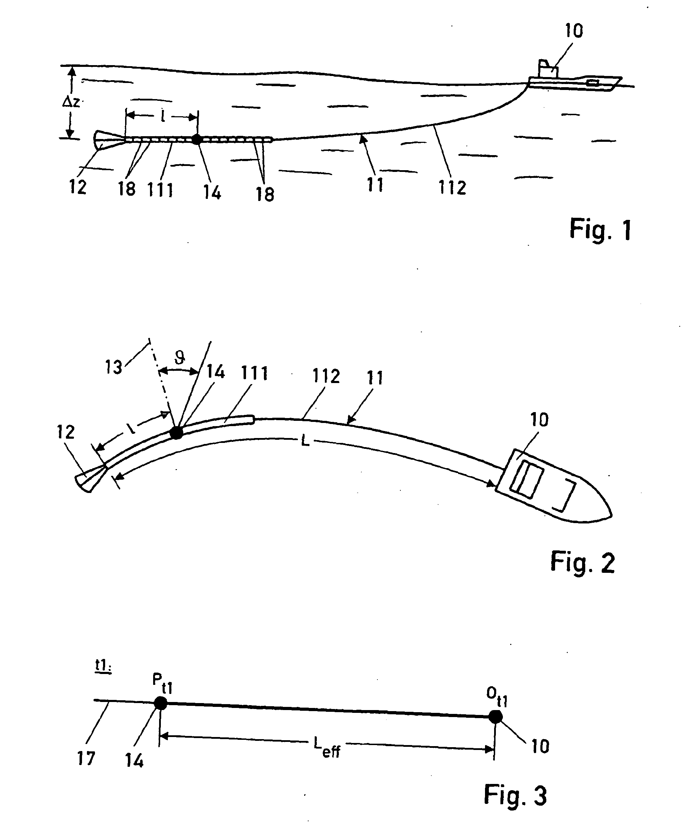

Zur Detektion und Peilung von schallabstrahlenden oder schallreflektierenden Unterwasserzielen wird von einem Schleppfahrzeug 10, das ein Über- oder Unterwasserfahrzeug sein kann und in Fig. 1 als Überwasser- oder Oberflächenschiff illustriert ist, eine Schleppantenne 11 ausgebracht, die vom Schleppfahrzeug 10 nachgeschleppt wird. Aufbau und Funktion von Schleppantennen 11 sind hinlänglich bekannt. Ihr möglicher Aufbau ist beispielsweise in der DE 198 11 335 A1 oder DE 195 18 461 A1 oder DE 199 09 205 A1 beschrieben. Die Schleppantenne 11 weist in bekannter Weise eine akustisch sensitive Akustiksektion 111, in der eine Vielzahl von elektroakustischen Wandlern 18 voneinander beabstandet in Längsrichtung hintereinandergereiht sind, und ein Schleppkabel 112 auf, das eine mechanische und elektrische Verbindung zwischen der Akustiksektion 111 und dem Schleppfahrzeug 10 herstellt. Die Wandler 18 sind in Fig. 1 durch in die Akustiksektion 111 eingezeichneten Punkte symbolisiert. Im Innern des Schleppkabels 112, das zugfest ausgeführt ist, verlaufen die hier nicht dargestellten elektrischen Versorgungs- und Signalleitungen der elektroakustischen Wandler 18 in der Akustiksektion 111. Am freien Ende der Schleppantenne 11 ist eine Schleppbremse 12 angeordnet, die zu einer weitgehenden Streckung der Schleppantenne 11, insbesondere der Akustiksektion 111, beiträgt und ein Pendeln des Schleppantennenendes weitgehend unterdrückt. Üblicherweise sind zwischen Akustiksektion 111 einerseits und Schleppkabel 112 und Schleppbremse 12 andererseits Dämpfungsmodule, sog. VIMs, angeordnet, auf deren Darstellung in Fig. 1 und 2 verzichtet worden ist. Beim Schleppen wird die Akustiksektion 111 in einer gewünschten Tauchtiefe ΔZ geschleppt, die abhängig ist von dem in der Schleppantenne 11 eingestellten Auftrieb und der Schleppgeschwindigkeit des Schleppfahrzeugs 10.

Während der Schleppfahrt werden mittels der Akustiksektion 111 schallerzeugende oder schallreflektierende Unterwasserziele detektiert und gepeilt. Zu der an sich bekannten Peilung wird die Vielzahl der elektroakustischen Wandler 18 in der Akustiksektion 111 herangezogen, deren Ausgangssignale - wie eingangs beschrieben - zeitrichtig verzögert und konphas zu Gruppensignalen von Richtcharakteristiken addiert werden. Der Peilwinkel ϑ ist der Winkel zwischen der Hauptachse der Richtcharakteristik, mit der ein Unterwasserziel aufgefasst wird, und der im Ort des akustischen Schwerpunkts 14 der Akustiksektion 111 errichteten Normalen 13 (Fig. 2). Der Ort des akustischen Schwerpunkts 14 ist bei einer äquidistanten Aneinanderreihung der elektroakustischen Wandler 18 in der Akustiksektion 111 der geometrische Mittelpunkt der Akustiksektion 111 und ist in Fig. 1 und 2 durch einen geschwärzten Kreis symbolisch dargestellt. Bei einer ungeradzahligen Zahl von elektroakustischen Wandlern 18 in der Akustiksektion 111, die alle einen konstanten Abstand voneinander aufweisen, ist der Ort des akustischen Schwerpunkts 14 der Ort des mittig in der Akustiksektion 111 liegenden Wandlers 18.

Um im Schleppfahrzeug 10 aus den Ausgangssignalen der elektroakustischen Wandler 18 in der Akustiksektion 111 den Peilwinkel ϑ bestimmen zu können, ist die Kenntnis der Lage bzw. Position der Antennensektion 111 und deren Ausrichtung im Wasser erforderlich. Bei einer Geradeausfahrt des Schleppfahrzeugs 10 kann davon ausgegangen werden, dass die Akustiksektion 111 in Tauchtiefe ΔZ unterhalb der Verlängerung der Fahrzeugslängsachse liegt. Führt jedoch das Schleppfahrzeug 10 ein Kursmanöver durch, so folgt die Schleppantenne nicht der Fahrbahn des Schleppfahrzeugs 10, so dass die Bahn, die die Akustiksektion 111 zurücklegt, mehr oder weniger stark von der Fahrbahn des Schleppfahrzeugs 10 abweicht. Daher ist es erforderlich, zu jedem Zeitpunkt, in dem eine Peilung des Unterwasserziels vorgenommen wird, die Position und die Ausrichtung der Akustiksektion 111 zu bestimmen. Dies wird durch folgendes, anhand der Fig. 3 bis 7 illustrierte Verfahren erreicht:

Zunächst wird die momentane Position der Akustiksektion 111 der Schleppantenne 11 an einem ausgewählten Ort innerhalb der Akustiksektion 111 festgemacht, d.h. die momentane Position des ausgewählten Orts wird als momentane Position der Akustiksektion 111 definiert. Vorzugsweise wird - wie im dargestellten Ausführungsbeispiel - der Ort des akustischen Schwerpunkts 14 der Akustiksektion 111, im folgenden Schwerpunktort 14 genannt, gewählt. Alternativ kann auch der Ort eines vorzugsweise im mittleren Bereich der Akustiksektion 111 angeordneten elektroakustischen Wandlers 18 ausgewählt werden.

In Fig. 3 ist zu einem Zeitpunkt t1 bei Geradeausfahrt des Schleppfahrzeugs 10 längs einer Fahrbahn 17 die Position des Schleppfahrzeugs 10 mit Fahrzeugposition $O_{t1}$ und die Position des Schwerpunktorts 14 mit Ortsposition $P_{t1}$ bezeichnet. Der während der Schleppfahrt konstante Abstand des Schwerpunktorts 14 von dem Schleppfahrzeug 10 ist durch die effektive Länge $L_{eff}$ der Schleppantenne 11 festgelegt. Die effektive Länge $L_{eff}$ lässt sich vereinfacht aus der ausgebrachten Länge L der Schleppantenne 11, die um den Abstand 1 des Schwerpunktorts 14 vom freien Ende der. Schleppantenne 11 reduziert ist, und der Schlepptiefe $\Delta Z$ der Akustiksektion 111 entsprechend der Tiefendifferenz zwischen dem Schleppfahrzeug 10 und der Akustiksektion 111 (Fig. 1 und 2) gemäß

$$L_{eff} = \sqrt{(L - l)^2 - (\Delta Z)^2}$$

berechnen.

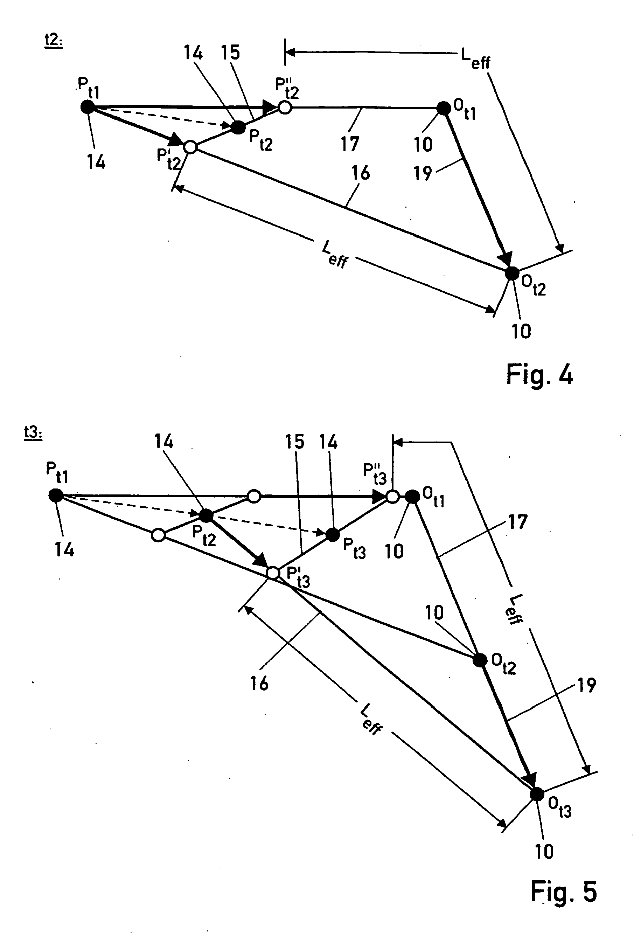

Zum Zeitpunkt t1 nimmt das Schleppfahrzeug 10 die Fahrzeugposition $O_{t1}$ ein (Fig. 3) und ändert nach einem Kursmanöver seine Fahrtrichtung, wobei es zum Zeitpunkt t2 nach Zurücklegen einer definierten Fahrstrecke 19 seine neue Fahrzeugposition $O_{t2}$ erreicht (Fig. 4). Da die Akustiksektion 111 - wie schon erwähnt - nicht der Fahrbahn 17 des Schleppfahrzeugs 10 folgt, wird mittels eines Modells die "neue" Ortsposition $P_{t2}$ des Schwerpunktorts 14 am Ende der Fahrstrecke 19 des Schleppfahrzeugs 10 zum Zeitpunkt t2 aus der zu Beginn der definierten Fahrstrecke 19 zum Zeitpunkt t1 eingenommenen "alten" Ortsposition $P_{t1}$ des Schwerpunktorts 14 und "alten" Fahrzeugposition $O_{t1}$ des Schleppfahrzeugs 10 sowie der neuen Fahrzeugposition $O_{t2}$ des Schleppfahrzeugs 10 und der effektiven Länge $L_{eff}$ der Schleppantenne 11 geschätzt.

Bei dem hierfür bevorzugten Modell wird die Annahme getroffen, dass nach einer Fahrstrecke 19 des Schleppfahrzeugs 10 die dann von dem Schwerpunktort 14 eingenommene Ortsposition $P_{t2}$ auf einer Geraden 15 liegt, die eine erste fiktive Ortsposition $P'_{t2}$ des Schwerpunktorts 14 und eine zweite fiktive Ortsposition $P''_{t2}$ des Schwerpunktorts 14 miteinander verbindet (Fig. 4). Die erste fiktive Ortsposition $P'_{t2}$ liegt dabei auf einer Verbindungsgeraden 16 zwischen der vom Schwerpunktort 14 vorhergehend eingenommenen alten Ortsposition $P_{t1}$ und der vom Schleppfahrzeug 10 eingenommenen neuen Fahrzeugposition $O_{t2}$. Die zweite fiktive Ortsposition $P''_{t2}$ liegt auf der vom Schleppfahrzeug 10 insgesamt real durchlaufenen Fahrbahn 17. Der Abstand der ersten fiktiven Ortsposition $P'_{t2}$ von der neuen Fahrzeugposition $O_{t2}$ entspricht der längs der Verbindungsgeraden 16 aufgespannten effektiven Länge $L_{eff}$ der Schleppantenne 11. Der Abstand der zweiten fiktiven Ortsposition $P''_{t2}$ von der neuen Fahrzeugposition O entspricht der längs der Fahrbahn 17 (einschließlich der von $t_1$ nach $t_2$ zurückgelegten Fahrstrecke 19) aufgespannten effektiven Länge $L_{eff}$ der Schleppantenne 11.

Die Lage der am Ende der Fahrstrecke 19 des Schleppfahrzeugs 10 zum Zeitpunkt t2 geschätzten neuen Ortsposition $P_{t2}$ auf der Geraden 15, die die erste und zweite fiktive Ortspositionen $P'_{t2}$ und $P''_{t2}$ miteinander verbindet, ist abhängig von der Länge dieser Geraden 15 und wird dadurch bestimmt, dass die Länge der Geraden 15 mit einem festen Faktor multipliziert wird. Dieser Multiplikationsfaktor wird empirisch so bestimmt, dass die Multiplikation der Länge der Geraden 15 mit dem Faktor den Abstand der geschätzten neuen Ortsposition $P_{t2}$ von der ersten fiktiven Ortsposition $P'_{t2}$ festlegt. Der Faktor kann aber auch so bestimmt werden, dass die mit dem Faktor multiplizierte Länge der Geraden 15 den Abstand der geschätzten neuen Ortsposition $P_{t2}$ von der zweiten fiktiven Ortsposition $P''_{t2}$ angibt. Eine Möglichkeit der empirischen Bestimmung des Multiplikationsfaktors besteht darin, in einer Simulationsrechnung mit Finite-Elementen die geschätzten Ortspositionen zu bestimmen und im Vergleich mit dem erfindungsgemäßen Modell den Faktor quasi rückwärts abzuleiten.

In Fig. 5 bis 7 sind weitere Schätzungen der jeweils neuen Ortsposition des Schwerpunktorts 14 dargestellt, wenn das Fahrzeug 10 nach Beendigung seines Kursmanövers geradlinig weiterfährt.

Wie in Fig. 5 illustriert ist, setzt zum Zeitpunkt t2 das Schleppfahrzeug 10 seine Schleppfahrt geradlinig fort und erreicht nach Zurücklegen der weiteren Fahrstrecke 19 im Zeitpunkt t3 die neue Fahrzeugposition $O_{t3}$. Die nächste, neue Ortsposition $P_{t3}$ des Schwerpunktorts 14 am Ende dieser weiteren Fahrstrecke 19 im Zeitpunkt t3 wird wiederum mittels des beschriebenen Modells aus der nunmehr bekannten, nämlich zuvor geschätzten, alten Ortsposition $P_{t2}$ des Schwerpunktorts 14 und der bekannten alten Fahrzeugposition $O_{t2}$ des Schleppfahrzeugs 10 zu Beginn der weiteren Fahrstrecke 19 im Zeitpunkt t2 sowie der neuen Fahrzeugposition $O_{t3}$ des Schleppfahrzeugs 10 am Ende der weiteren Fahrstrecke 19 zum Zeitpunkt t3 geschätzt. Die neue Ortsposition $P_{t3}$ liegt auf der nächsten Geraden 15, die jetzt die erste fiktive Ortsposition $P'_{t3}$ mit der zweiten fiktiven Ortsposition $P''_{t3}$ verbindet. Die genaue Lage der geschätzten Ortsposition $P_{t3}$ auf der Geraden 15 ergibt sich wiederum aus der Multiplikation der Länge der Geraden 15 mit dem beschriebenen Faktor. Ebenso wie bei der vorstehend beschriebenen Fig. 4 liegt wiederum die erste fiktive Ortsposition $P'_{t3}$ auf der Verbindungsgeraden 16 zwischen der vom Schwerpunktort 14 vorhergehend, also zum Zeitpunkt t2, eingenommenen alten Ortsposition $P_{t2}$ und der neuen Fahrzeugsposition $O_{t3}$ und die zweite fiktive Ortsposition $P''_{t3}$ auf der vom Schleppfahrzeug 10 durchfahrenen Fahrbahn 17. Der Abstand der beiden fiktiven Ortspositionen $P'_{t3}$ und $P''_{t3}$ von der neuen Fahrzeugposition $O_{t3}$ entspricht wiederum der effektiven Länge $L_{eff}$ der Schleppantenne 11, die für die fiktive Ortsposition $P'_{t3}$ längs der Verbindungsgeraden 16 und für die fiktive Ortsposition $P''_{t3}$ längs der Fahrbahn

17 abgetragen wird.

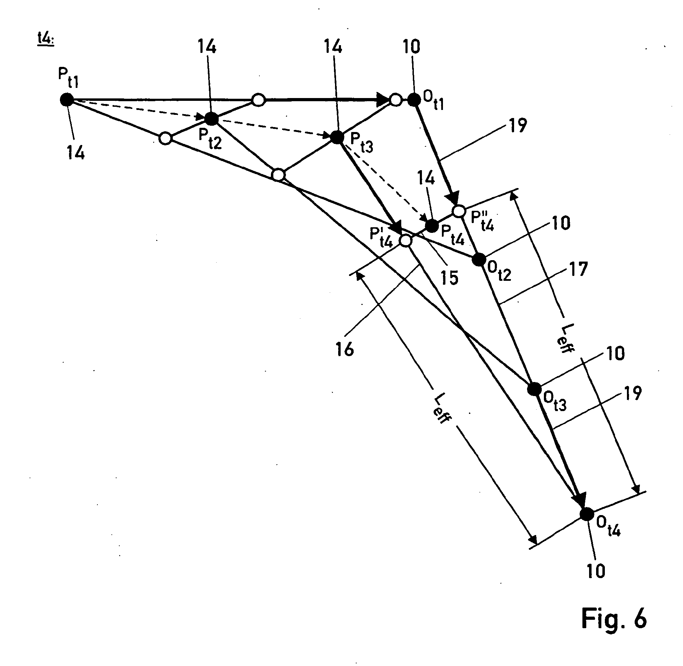

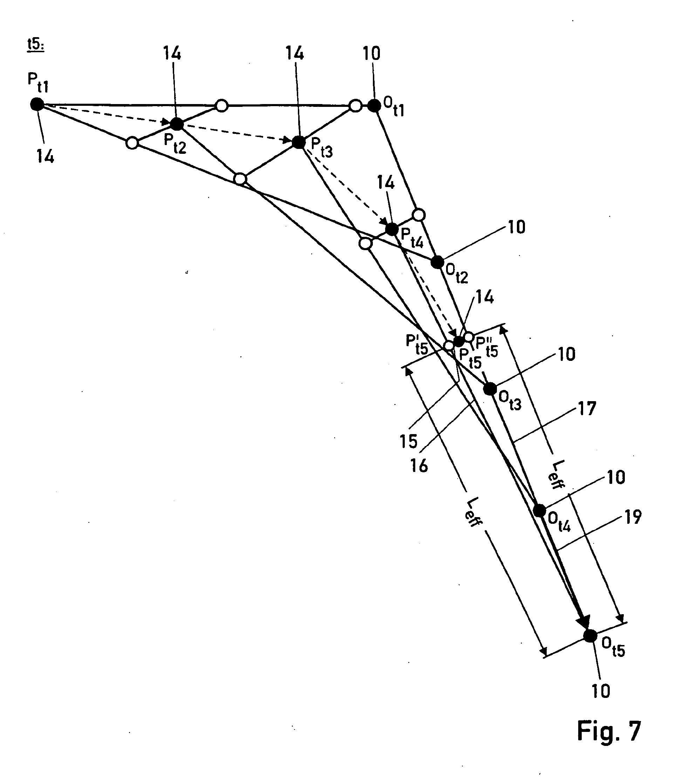

In der in Fig. 6 und 7 skizzierten, weiter erfolgenden Schleppfahrt des Schleppfahrzeugs 10 von der Fahrzeugposition $O_{t3}$ über die Fahrzeugposition $O_{t4}$ zur Fahrzeugposition $O_{t5}$ werden die weiteren Ortspositionen $P_{t4}$ und $P_{t5}$ des Schwerpunktorts 14 wie zuvor beschrieben geschätzt. Der Schwerpunktort 14 wandert zu den mittels des beschriebenen Modells geschätzten weiteren Ortspositionen $P_{t4}$ und $P_{t5}$. Wie daraus ersichtlich ist, nähert sich bei Geradeausfahrt des Schleppfahrzeugs 10 nach einem Kursmanöver der Schwerpunktort 14 zunehmend der Fahrbahn 17 des Schleppfahrzeugs 10 und gelangt schließlich wieder auf die Fahrbahn 17 des Schleppfahrzeugs 10 wenn das Schleppfahrzeug 10 kein neues Kursmanöver ausführt.

Das vorstehend beschriebene Modell zur Schätzung der Position der Akustiksektion 111 der Schleppantenne 11 beruht auf der Überlegung, dass der ausgewählte Ort der Akustiksektion 111, hier der Ort des akustischen Schwerpunkts 14 der Akustiksektion 111, in einem Medium mit extrem großer Dichte exakt der Fahrbahn 17 des Schleppfahrzeugs 10 folgt, hingegen im Vakuum einen direkten Querversatz durch die über das Schleppkabel 112 angreifende Zugkraft erfährt. Daher legt einerseits die Fahrbahn 17 des Schleppfahrzeugs 10 und andererseits die Verbindungsgerade 16 zwischen der bekannten Ortsposition des Schwerpunktorts 14 zu Beginn einer vom Schleppfahrzeug 10 zurückgelegten Fahrstrecke 19 und der am Ende der Fahrstrecke 19 vom Schleppfahrzeug 10 erreichten neuen Fahrzeugposition den Bereich fest, den der Schwerpunktort 14 bei Kursmanöver durchläuft. Der Faktor, der die genaue Ortsposition P des Schwerpunktorts 14 auf der die fiktiven Ortspositionen P' und P" miteinander verbindenden Geraden 15 ergibt, ist abhängig von der Dichte des Wassers im Einsatzgebiet des Schleppfahrzeugs 10 und kann für verschiedene Einsatzgebiete vorgehalten werden.

Die Ausrichtung der Akustiksektion 111 in den verschiedenen Ortspositionen $P_{t1}$ bis $P_{t5}$ kann jeweils aus zwei aufeinanderfolgend geschätzten Ortspositionen $P_{t1}$, $P_{t2}$ bzw. $P_{t2}$, $P_{t3}$, bzw. $P_{t3}$, $P_{t4}$, bzw. $P_{t4}$, $P_{t5}$, also aus den beiden Ortspositionen zu Beginn und am Ende der jeweils vom Schleppfahrzeug 10 zurückgelegten Fahrstrecke 19, ermittelt werden. Die in den Fig. strichliniert dargestellten Verbindungsstrecken zwischen jeweils zwei aufeinanderfolgenden Ortspositionen $P_{t1}$ bis $P_{t5}$ geben dann jeweils die Lage bzw. Ausrichtung der Akustiksektion 111 an. Diese Ausrichtung der Akustiksektion 111 wird jeweils der jüngeren Ortsposition der Ortspositionspaarungen, also der Ortsposition am Ende der jeweiligen Fahrstrecke 19 zugewiesen.

Die Beschränkung der Bestimmung der Lage und Ausrichtung der Akustiksektion 111 auf einen ausgewählten Ort in der Akustiksektion 111, vorzugsweise auf den Ort des akustischen Schwerpunkts 14 der Akustiksektion 111, liefert für die Peilung ausreichend genaue Werte, die mit nur geringem Rechenaufwand ermittelt werden können. Bei höherer Genauigkeitsanforderung an die Position und Lage der Akustiksektion 111 werden in gleicher Weise - wie vorstehend mit dem Ort des akustischen Schwerpunkts 14 als ausgewählter Ort der Akustiksektion 111 beschrieben - die momentanen Positionen aller Wandler 18 in der Akustiksektion 111 zum gleichen Zeitpunkt bestimmt. Durch die bekannten Positionen aller Wandler der Akustiksektion 111 zu jeweils einem Peilzeitpunkt t1 bis t5 erhält man das Lagebild der Akustiksektion 111 zu jedem Peilzeitpunkt, die auch eine evtl. Krümmung der Akustiksektion 111 berücksichtigt, wie dies in Fig. 2 dargestellt ist. Eine solche Bestimmung der Lage und Ausrichtung der Akustiksektion 111 erfordert allerdings eine sehr viel größeren Rechenaufwand, schränkt aber die Fehlertoleranz des Peilwinkels ein.

**Patentansprüche**

1. Verfahren zum Bestimmen der momentanen Position einer in gewählter Schlepptiefe ($\Delta Z$) geschleppten Akustiksektion (111) einer von einem Schleppfahrzeug (10) im Wasser nachgeschleppten Schleppantenne (11) von ausgebrachter Länge (L), **dadurch gekennzeichnet, dass** die Position der Akustiksektion (111) an mindestens einem ausgewählten Ort in der Akustiksektion (111) festgemacht wird und dass die Position des ausgewählten Orts nach einer vom Schleppfahrzeug (10) längs seiner Fahrbahn (17) zurückgelegten, definierten Fahrstrecke (19) mittels eines Modells aus den zu Beginn der Fahrstrecke (19) von Schleppfahrzeug (10) und ausgewähltem Ort eingenommenen Positionen und der vom Schleppfahrzeug (10) am Ende der Fahrstrecke (19) eingenommenen Position unter Einbeziehung von ausgebrachter Länge (L) der Schleppantenne (11) und Schlepptiefe ($\Delta Z$) der Akustiksektion (111) geschätzt wird.

2. Verfahren nach Anspruch 1, **dadurch gekennzeichnet, dass** aus den Positionen des ausgewählten Orts zu Beginn und am Ende der vom Schleppfahrzeug (10) zurückgelegten Fahrstrecke (19) die Ausrichtung der Akustiksektion (111) bestimmt und der Position des ausgewählten Orts am Ende der Fahrstrecke (19) zugeordnet wird.

3. Verfahren nach Anspruch 1 oder 2, **dadurch gekennzeichnet, dass** bei dem Modell die Annahme getroffen wird, dass die am Ende der definierten Fahrstrecke (19) des Schleppfahrzeugs (10) vom ausgewählten Ort der Akustiksektion (111) eingenommene neue Ortsposition auf einer Geraden (15) liegt, die eine erste fiktive Ortsposition (P') und eine zweite fiktive Ortsposition (P") miteinander verbindet, die erste fiktive Ortsposition (P') auf einer Verbindungsgeraden (16) zwischen der vom ausgewählten Ort zu Beginn der Fahrstrecke (19) eingenommenen alten Ortsposition (P) und der am Ende der Fahrstrecke (19) eingenommenen neuen Fahrzeugposition (O) und die zweite fiktive Ortsposition (P") auf der Fahrbahn (17) liegt und die Entfernungen der beiden fiktiven Ortspositionen (P',P") von der neuen Fahrzeugposition (O) jeweils gleich einer effektiven Länge ($L_{eff}$) der Schleppantenne (11) bemessen wird, die einerseits längs der Verbindungsgeraden (16) und andererseits längs der Fahrbahn (17) abgetragen wird.

4. Verfahren nach Anspruch 3, **dadurch gekennzeichnet, dass** die effektive Länge ($L_{eff}$) der Schleppantenne (11) anhand der um den Abstand (1) des ausgewählten Orts in der Akustiksektion (111) von dem freien Ende der Schleppantenne (11) reduzierten ausgebrachten Länge (L) der Schleppantenne (11) und der durch die Tiefendifferenz zwischen Schleppfahrzeug (10) und Akustiksektion (111) festgelegten Schlepptiefe ($\Delta Z$) der Akustiksektion (111) und der Akustiksektion (111) bestimmt wird.

5. Verfahren nach Anspruch 3 oder 4, **dadurch gekennzeichnet, dass** der längs der Geraden (15) zwischen der ersten und zweiten fiktiven Ortsposition (P',P") gemessene Abstand der neuen Ortsposition (P) von der ersten oder zweiten fiktiven Ortsposition (P',P") durch die mit einem Faktor multiplizierte Länge der Geraden (15) festgelegt wird.

6. Verfahren nach Anspruch 5, **dadurch gekennzeichnet, dass** der Faktor eine feste Größe ist.

7. Verfahren nach Anspruch 5 oder 6, **dadurch gekennzeichnet, dass** der Faktor empirisch bestimmt wird.

8. Verfahren nach einem der Ansprüche 1 bis 7, **dadurch gekennzeichnet, dass** als der mindestens eine ausgewählte Ort der Ort des akustischen Schwerpunkts (14) der Akustiksektion (111) herangezogen wird.

9. Verfahren nach einem der Ansprüche 1 bis 8, **dadurch gekennzeichnet, dass** die Akustiksektion (111) eine Mehrzahl von in Schlepprichtung hintereinander beabstandet angeordneten, elektroakustischen Wandlern (18) aufweist und dass als der mindestens eine ausgewählte Ort der Akustiksektion (111) der Ort eines Wandlers (18) herangezogen wird.

10. Verfahren nach einem der Ansprüche 1 bis 8, **dadurch gekennzeichnet, dass** die Akustiksektion (111) eine Mehrzahl von in Schlepprichtung hintereinander beabstandet angeordneten, elektroakustischen Wandlern (18) aufweist und dass die ausgewählten Orte die Orte aller Wandler (18) der Akustiksektion (111) sind.

## Claims

1. A method for determining the instantaneous position of an acoustics section (111), which is towed at a chosen towing depth ($\Delta Z$), of a towed-array antenna (11) which is towed behind a towing vehicle (10) in the water and has a deployed length (L), **characterized in that** the position of the acoustics section (111) is fixed at at least one chosen point in the acoustics section (111), and **in that** the position of the chosen point after a defined movement distance (19) which has been traveled by the towing vehicle (10) along its movement path (17) is estimated by means of a model from the positions assumed for the towing vehicle (10) and the chosen point at the start of the movement distance (19) and the position assumed by the towing vehicle (10) at the end of the movement distance (19), including the deployed length (L) of the towed-array antenna (11) and the towing depth ($\Delta Z$) of the acoustics section (111).

2. The method as claimed in claim 1, **characterized in that** the alignment of the acoustics section (111) is determined from the positions of the chosen point at the start and at the end of the movement distance (19) which has been traveled by the towing vehicle (10), and is associated with the position of the chosen point at the end of the movement distance (19).

3. The method as claimed in claim 1 or 2, **characterized in that** the model makes the assumption that the new location position which the chosen point in the acoustics section (111) assumes at the end of the defined movement distance (19) of the towing vehicle (10) lies on a straight line (15) which connects a first fictitious location position (P') and a second fictitious location position (P") to one another, that the first fictitious location position (P') lies on a connecting straight line (16) between the old location position (P) assumed by the chosen point at the start of the movement distance (19) and the new vehicle position (0) assumed at the end of the movement distance (19), and that the second fictitious location position (P") lies on the movement path (17), and that the distances between the two fictitious location positions (P', P") and the new vehicle position (0) are each made the same as an effective length ($L_{eff}$) of the towed-array antenna (11) which is plotted, on the one hand, along the connecting straight line (16) and, on the other hand, along the movement path (17).

4. The method as claimed in claim 3, **characterized in that** the effective length ($L_{eff}$) of the towed-array antenna (11) is determined on the basis of the deployed length (L) of the towed-array antenna (11), reduced by the distance (1) between the chosen point in the acoustics section (111) and the free end of the towed-array antenna (11), and the towing depth ($\Delta Z$) of the acoustics section (111), as defined by the depth difference between the towing vehicle (10) and the acoustics section (111), and the acoustics section (111).

5. The method as claimed in claim 3 or 4, **characterized in that** the distance, as measured along the straight line (15) between the first and second fictitious location positions (P', P''), between the new location position (P) and the first or second fictitious location position (P', P'') is defined by the length of the straight line (15) multiplied by a factor.

6. The method as claimed in claim 5, **characterized in that** the factor is a fixed parameter.

7. The method as claimed in claim 5 or 6, **characterized in that** the factor is determined empirically.

8. The method as claimed in one of claims 1 to 7, **characterized in that** the location of the acoustic centroid (14) of the acoustics section (111) is used as the at least one chosen point.

9. The method as claimed in one of claims 1 to 8, **characterized in that** the acoustics section (111) has a plurality of electroacoustic transducers (18) arranged at a distance one behind the other in the towing direction, and **in that** the location of a transducer (18) is used as the at least one chosen point in the acoustics section (111).

10. The method as claimed in one of claims 1 to 8, **characterized in that** the acoustics section (111) has a plurality of electroacoustic transducers (18) arranged at a distance one behind the other in the towing direction, and **in that** the chosen points are the locations of all the transducers (18) in the acoustics section (111).

**Revendications**

1. Procédé pour déterminer la position momentanée d'une section acoustique (111), remorquée à une profondeur de remorquage ($\Delta Z$) choisie, d'une antenne remorquée (11) ayant une longueur déployée (L), remorquée dans l'eau par un véhicule remorqueur (10), **caractérisé en ce que** la position de la section acoustique (111) est rendue fixe en au moins un endroit choisi dans la section acoustique (111) et que la position de l'endroit choisi est estimée après un trajet (19) défini, parcouru par le véhicule remorqueur (10) le long de sa trajectoire de déplacement (17), au moyen d'un modèle à partir des positions occupées au début du trajet (19) par le véhicule remorqueur (10) et l'endroit choisi et de la position occupée à la fin du trajet (19) par le véhicule remorqueur (10) en intégrant la longueur déployée (L) de l'antenne remorquée (11) et la profondeur de remorquage ($\Delta Z$) de la section acoustique (111).

2. Procédé selon la revendication 1, **caractérisé en ce que** l'orientation de la section acoustique (111) est déterminée à partir des positions de l'endroit choisi au début et à la fin du trajet (19) parcouru par le véhicule remorqueur (10) et elle est associée à la position de l'endroit choisi à la fin du trajet (19).

3. Procédé selon la revendication 1 ou 2, **caractérisé en ce que** le modèle prend pour hypothèse que la nouvelle position de l'endroit à la fin du trajet (19) défini du véhicule remorqueur (10) occupée par l'endroit choisi de la section acoustique (111) se trouve sur une droite (15) qui relie ensemble une première position d'endroit fictive (P') et une deuxième position d'endroit fictive (P''), la première position d'endroit fictive (P') se trouvant sur une droite de liaison (16) entre l'ancienne position d'endroit (P) occupée par l'endroit choisi au début du trajet (19) et la nouvelle position du véhicule (0) occupée à la fin du trajet (19) et la deuxième position d'endroit fictive (P'') se trouvant sur la trajectoire de déplacement (17) et les distances entre les deux positions d'endroit fictives (P', P'') et la nouvelle position du véhicule (0) étant respectivement dimensionnées à une valeur égale à une longueur effective ($L_{eff}$) de l'antenne remorquée (11) qui est traînée d'un côté le long de la droite de liaison (16) et de l'autre côté le long de la trajectoire de déplacement (17).

4. Procédé selon la revendication 3, **caractérisé en ce que** la longueur effective ($L_{eff}$) de l'antenne remorquée (11) est déterminée au moyen de la longueur déployée (L) de l'antenne remorquée (11), déduite de l'écart (1) entre l'endroit choisi dans la section acoustique (111) et l'extrémité libre de l'antenne remorquée (11), et de la profondeur de remorquage ($\Delta Z$) de la section acoustique (111), fixée par la différence de profondeur entre le véhicule remorqueur (10) et la section acoustique (111), et la section acoustique (111).

5. Procédé selon la revendication 3 ou 4, **caractérisé en ce que** l'écart entre la nouvelle position d'endroit (P) et la première ou la deuxième position d'endroit fictive (P', P'') mesuré le long de la droite (15) entre la première et la deuxième positions d'endroit fictives (P', P'') est défini par la longueur de la droite (15) multipliée par un facteur.

**6.** Procédé selon la revendication 5, **caractérisé en ce que** le facteur est une grandeur fixe.

**7.** Procédé selon la revendication 5 ou 6, **caractérisé en ce que** le facteur est déterminé de manière empirique.

**8.** Procédé selon l'une des revendications 1 à 7, **caractérisé en ce que** l'au moins un endroit choisi utilisé est l'endroit du barycentre acoustique (14) de la section acoustique (111).

**9.** Procédé selon l'une des revendications 1 à 8, **caractérisé en ce que** la section acoustique (111) présente une pluralité de transducteurs électroacoustiques (18) espacés les uns derrière les autres dans le sens du remorquage et que l'au moins un endroit choisi de la section acoustique (111) utilisé est l'endroit d'un transducteur (18).

**10.** Procédé selon l'une des revendications 1 à 8, **caractérisé en ce que** la section acoustique (111) présente une pluralité de transducteurs électroacoustiques (18) espacés les uns derrière les autres dans le sens du remorquage et que les endroits choisis sot les endroits de tous les transducteurs (18) de la section acoustique (111).

Fig. 1

Fig. 2

Fig. 3

t2:

Fig. 4

t3:

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19650164 A1
- DE 19811335 A1
- DE 19518461 A1
- DE 19909205 A1